# DEMANDE DE BREVET EUROPEEN

(11) **EP 1 837 220 A2**
(43) Date de publication de la demande: **26.09.2007**
(21) Numéro de dépôt: 07350001.9
(22) Date de dépôt: 09.02.2007
(51) Int. Cl.: B60J 5/04

(54) **Portière de véhicule renforcée**

(30) Priorité: 22.03.2006 FR 0602501
(71) Demandeur: Heuliez, 79140 Cerizay (FR)
(72) Inventeur: Quéveau, Gérard, 79140 Le Pin (FR); Quéveau, Paul, 79140 Montravers (FR)
(74) Mandataire: Tournel, Jean Louis

(57) **Abrégé**

L'invention a pour objet une portière comprenant un panneau (2) extérieur et une structure (3,13)de renfort caractérisée en ce que la structure (3) de renfort est constituée de deux plaques (3A, 3B) dont au moins une est évidée en sa partie centrale, ces plaques étant embouties pour être mises en forme et assemblées pour former un renfort (13) tubulaire axé dans le sens de la longueur, cet ensemble étant rapporté ensuite sur le panneau extérieur.

## Description

L'invention se rapporte à une portière de véhicule.

Elle se rapporte plus particulièrement mais non limitativement à une portière dite sans cadre.

Elle se rapporte également au véhicule pourvu de la dite portière.

La sécurité en cas d'accident dépend notamment de la structure du véhicule.

En effet pour protéger les passagers, les véhicules sont construits en sorte que la partie avant du véhicule se déforme en des zones particulières permettant d'absorber l'énergie alors que l'habitacle doit être construit pour se déformer le moins possible.

Dans les berlines, la structure du plancher, celle du toit et les portière participent à la sécurité et notamment à la non déformation de l'habitacle.

Sur les véhicules cabriolets, le toit n'étant pas présent et la portière étant limitée aux deux panneaux qui la forment, la situation est moins favorable et c'est principalement la structure du plancher qui doit assurer la rigidité.

Il est connu de renforcer la portière en y insérant des renforts tubulaires qui sont logés entre les deux panneaux selon la configuration du véhicule et selon l'implantation des accessoires de la portière moteur électrique de la vitre etc..

Ces barres de renforts sont soudées sur la structure existante et il est toujours difficile de les rapporter car il faut tenir compte des tolérances de montage.

On connaît EP1564050 la réalisation d'un renfort tubulaire, pour une portière classique en assemblant deux plaques de faible hauteur fixées à chaque extrémité sur le bord avant et arrière d'un cadre d'une portière. En cas de choc il est prévu que l'extrémité avant de ce renfort tubulaire forme un poinçon pour coulisser au travers du bord avant du cadre pour éviter de déformer le cadre. La reprise d'efforts est donc très localisée

L'invention propose une solution économique et efficace.

A cet effet l'invention a pour objet une portière comprenant un panneau extérieur et une structure de renfort caractérisé en ce que la structure de renfort est constituée de deux plaques dont au moins une est évidée en partie centrale, ces plaques étant embouties pour être mises en forme et assemblées pour former un renfort tubulaire axé dans le sens de la longueur, l'ensemble formé par ces plaques étant rapporté ensuite sur le panneau extérieur et fixé au niveau des deux cotés latéraux et du bord inférieur.

L'invention a également pour objet le véhicule pourvu de la dite portière ainsi que le procédé de montage.

L'invention sera bien comprise à l'aide de la description ci-après faite à titre d'exemple non limitatif.

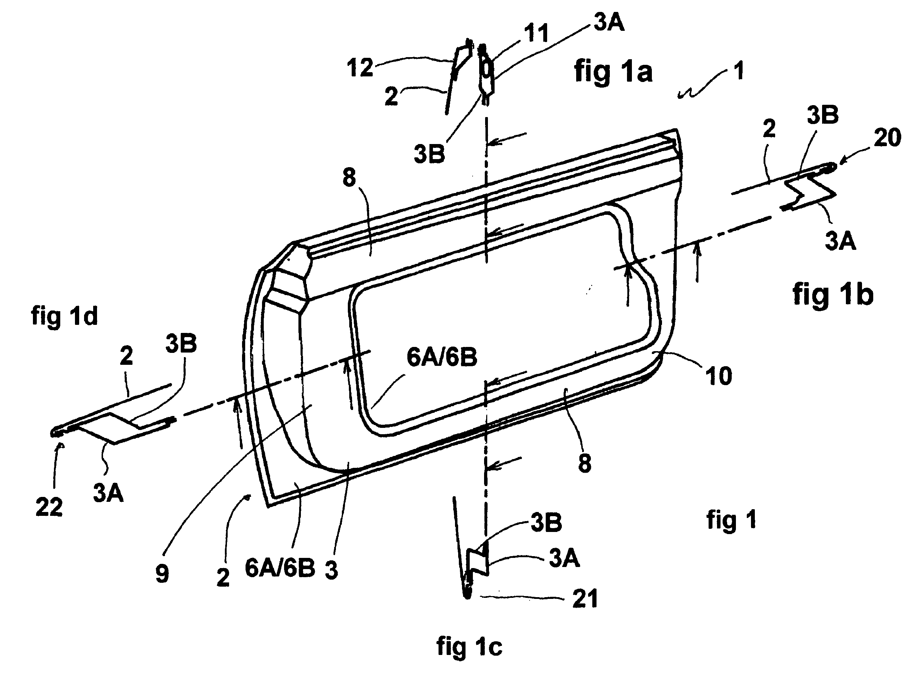

FIG 1 : une portière selon l'invention
FIG 1 a à FIG 1d : Coupes transversales de la portière en haut, à droite, en bas et à gauche de la portière de la figure 1
FIG 2 : Vue éclatée de la portière selon l'invention.
FIG 3 : Vue d'une portière en cours de construction.
FIG 4 Coupe selon IV IV de la figure 3.

En se reportant au dessin, on voit une portière 1 notamment pour cabriolet, c'est à dire une portière sans cadre entourant la vitre latérale lorsque celle-ci est relevée.

Cette portière comporte un panneau 2 extérieur et une structure 3, 13 de renfort pour améliorer sa résistance.

La structure de renfort 3,13 est constituée de deux plaques 3A,3B dont au moins une est évidée en sa partie centrale, ces plaques étant embouties pour être mises en forme et assemblées pour former un renfort tubulaire longitudinal, l'ensemble formé par les plaques étant rapporté ensuite sur le panneau extérieur et fixé sur les cotés latéraux et inférieur du panneau extérieur.

L' étendue d'au moins une des plaques est sensiblement celle du panneau extérieur.En cas de choc, à la fois le renfort tubulaire et la plaque évidée vont participer à l'effort qui sera réparti sur les trois cotés où cette structure de renfort est fixée sur le panneau extérieur.

Le fait de prévoir un évidemment permet, notamment d'alléger la structure.

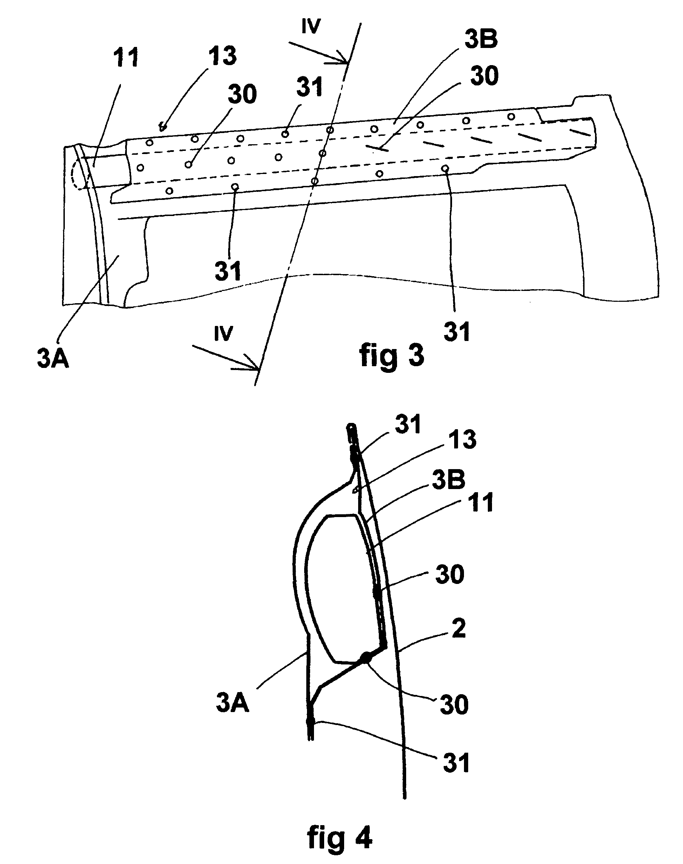

Sur les figures 3 et 4, une 3A des plaques est ajourée en son centre et s'étend jusqu'à sensiblement la base de la portière alors que la seconde 3B est d'étendue limitée pour former un renfort 13 tubulaire longitudinal axé selon le sens de déplacement du véhicule .

Ce renfort 13 tubulaire se situe en partie haute de la portière.

Avantageusement, ce renfort 13 tubulaire logera une structure 11 également tubulaire logé dans ce renfort tubulaire.

Pour une masse donnée, la résistance d'un tube est supérieure à celle d'un profilé ouvert.

On améliore donc la résistance en imbriquant une structure tubulaire dans un renfort tubulaire creux.

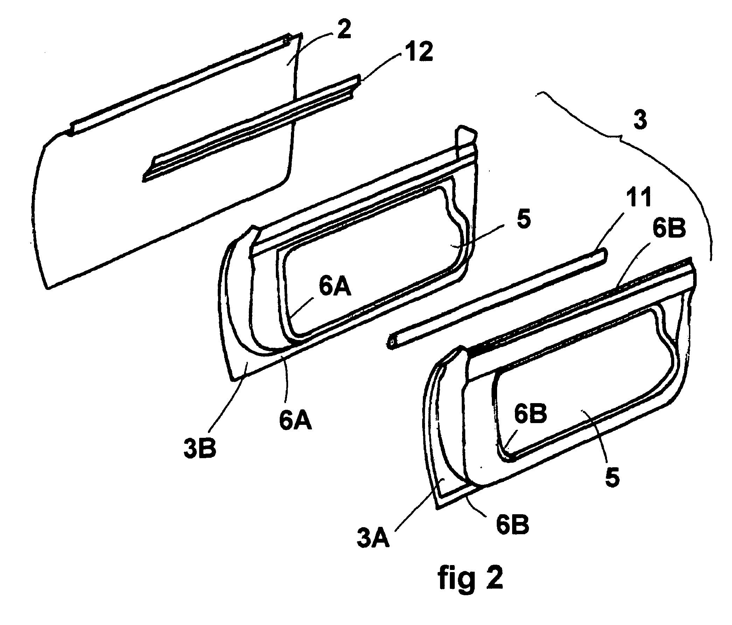

Comme on le voit sur la figure 2, chaque plaque présente une ouverture 5 centrale et la périphérie interne et/ou externe de ces plaques a été déformée pour former des zones 6A, 6B d'appui se situant dans un autre plan que celui de la plaque.

On forme ainsi un cadre tubulaire creux

Les zones d'appui de ces deux plaques sont soudées l'une contre l'autre en sorte que l'on forme un cadre tubulaire creux comprenant deux branches creuses horizontales 7, 8 et deux branches verticales 9,10 qui forment un corps creux périphérique continu donnant de la rigidité à la portière. Ce cadre va être assemblé ensuite sur le panneau extérieur notamment par sertissage.

On voit sur les coupes transversales des figures 1b à 1d que l'assemblage serti se fait sur trois cotés, le bas et les deux cotées latéraux. On voit sur les coupes Fig 1b à 1d les sertissages 20,21,22.

Le quatrième coté, celui du haut de la portière, sert au passage de la vitre et de ce fait il est prévu un passage pour la vitre. Il ne peut y voir d'assemblage au niveau de ce passage de vitre.

On comprend donc que la structure 3,13 de renfort est construite préalablement à son association avec le panneau 2 extérieur. Cela permet de souder les deux plaques constituant cette structure et de donner de la résistance à cette structure. Cette structure apporte une meilleur résistance aux portières sans cadre d'un cabriolet ou d'un véhicule à toit mobile rétractable. La structure résistante 3 du véhicule n'est plus alors limitée en hauteur au plancher mais se prolonge bien au dessus du plancher en reliant le pied avant et le pied arrière juste au dessus du plancher (branche 8) et au niveau de la ceinture de caisse (branche 7) permettant ainsi de renforcer l'habitacle d'un tel véhicule. Elle pourrait être utilisée sur des portières classiques, c'est à dire des portières présentant un cadre entourant la vitre latérale.

Comme on le voit sur la figure 2, on peut augmenter la résistance de cette portière en insérant dans la structure 3 de renfort creuse au moins une barre 11 de renfort de préférence tubulaire.

Cette barre de renfort est disposée dans la branche horizontale 7 haute mais pourrait également être placée dans la branche horizontale 8 basse.

On voit également qu'au long du bord haut horizontal de la portière entre le panneau extérieur et la structure de renfort, on a inséré un profilé 12 de renfort.

Comme on peut le voir sur les coupes, la section des branches de la structure de renfort creuse sera souvent différente entre une branche et une autre et même au long de l'axe d'une branche.

Cette structure de renfort creuse délimite par son bord interne et la face interne du panneau extérieur un large volume pour y loger les accessoires d'une portière. Ce cadre creux de renfort va servir de support pour ces accessoires.

On va expliciter ci-après le mode de fixation de la barre 11 tubulaire de renfort qui facilite le montage.

La barre 11 tubulaire de renfort est préalablement fixée sur une des deux plaques 3A, 3B au moyen de soudures 30 bouchons ou tirets (laser ou galets). De préférence, il s'agira de la plaque 3B située vers l'extérieur de la portière.

Lorsque cet assemblage sera exécuté, la plaque 3B externe plus sa barre 11 sont fixées sur la plaque 3A interne par soudure 31 par points ou bouchon.

La barre 11 est soudée sur une seule des plaques 3A, 3B.

On formera ainsi un second renfort 13 tubulaire.

La barre 11 de renfort se trouve alors uniquement en contact avec la plaque 3B extérieure ce qui permet d'adopter des tolérances de fabrication plus larges. En effet les écarts de position liés à la fabrication seront absorbés par les espaces sans contact autour de la barre. De plus l'absence de liaison entre la barre et les autres pièces environnante, hormis la plaque 3B externe , permet d'éviter la création de contraintes à l'intérieur de la portière. En évitant ces contraintes, il n'y aura pas de déformation.

Par ailleurs cela simplifie fortement le montage.

## Revendications

1. Portière comprenant un panneau (2) extérieur et une structure (3,13)de renfort **caractérisée en ce que** la structure (3) de renfort est constituée de deux plaques (3A, 3B) dont au moins une est évidée en sa partie centrale, ces plaques étant embouties pour être mises en forme et assemblées pour former un renfort (13) tubulaire axé dans le sens de la longueur, cet ensemble étant rapporté ensuite sur le panneau extérieur et fixé sur les cotés latéraux et inférieur du panneau extérieur.

2. Portière selon la revendication 1 **caractérisé en ce que** l'une (3B) des plaques est d'étendue réduite par rapport à l'autre plaque.

3. Portière selon la revendication 1 **caractérisé en ce que** les deux plaques assemblées forment un cadre tubulaire creux.

4. Portière selon la revendication 3 **caractérisée en ce qu'**elle comprend deux branches creuses horizontales (7,8) et deux branches verticales (9,10).

5. Portière selon la revendication 1 ou 2 ou 3 ou 4 **caractérisée en ce qu'**une barre tubulaire (11) de renfort est logée dans le renfort (13) tubulaire axé dans le sens de la longueur ou dans une branche creuse horizontale (7,8).

6. Portière selon la revendication 5 **caractérisé en ce que** la barre (11) tubulaire de renfort est soudée sur une seule des deux plaques formant le renfort tubulaire (13, 7,8).

7. Portière selon l'une quelconque des revendications précédentes **caractérisée en ce que** la structure de renfort creuse (3, 13) est rapportée par sertissage sur le panneau (2) extérieur.

8. Portière selon l'une quelconque des revendications précédentes **caractérisée en ce qu'**elle comprend un profilé (12) de renfort inséré au long du bord haut horizontal de la portière entre le panneau extérieur et la structure de renfort.

9. Véhicule **caractérisé en ce qu'**il comprend une portière selon l'une quelconques des revendications précédentes.

10. Véhicule selon la revendication 9 **caractérisé en ce que** la portière est sans cadre.

11. Procédé de montage d'une structure de renfort d'une portière comprenant un panneau (2) extérieur et une structure (3) (13) de renfort **caractérisée en ce qu'**on assemble deux plaques (3A, 3B) dont au moins une est évidée en sa partie centrale, ces plaques étant préalablement embouties pour former une structure de renfort (13, 7,8) tubulaire axé dans le sens de la longueur, cet ensemble étant rapporté ensuite sur un panneau extérieur (2).

12. Procédé de montage d'une structure de renfort selon la revendication 11 **caractérisé en ce qu'**avant assemblage des deux plaques (3A,3B), on fixe par soudure une barre tubulaire (11) de renfort sur une seule des plaques (3A, 3B).

13. Procédé de montage selon la revendication 12 **caractérisée en ce que** la plaque sur laquelle est fixée la barre tubulaire est ensuite fixée par soudure sur l'autre plaque.
